# EUROPÄISCHE PATENTSCHRIFT

(11) **EP 1 325 393 B1**
(45) Veröffentlichungstag und Bekanntmachung des Hinweises auf die Patenterteilung: **15.03.2006**
(21) Anmeldenummer: 01980356.8
(22) Anmeldetag: 08.09.2001
(51) Int. Cl.: G05D 23/13

(54) **SANITÄRE MISCHBATTERIE**
SANITARY MIXING UNIT
MITIGEUR POUR INSTALLATIONS SANITAIRES

(30) Priorität: 29.09.2000 DE 10048044
(43) Veröffentlichungstag der Anmeldung: 09.07.2003
(73) Patentinhaber: Ideal-Standard GmbH & Co. OHG, 53121 Bonn (DE)
(72) Erfinder: EMS, Josef, 54516 Wittlich (DE); BERGMANN, Konrad, 54292 Trier (DE)
(74) Vertreter: Gesthuysen, von Rohr & Eggert
(86) Internationale Anmeldenummer: PCT/EP2001/010383
(87) Internationale Veröffentlichungsnummer: WO 2002/027420

(56) Entgegenhaltungen:
- DE-A- 1 550 252
- DE-U- 8 111 858
- GB-A- 861 708
- US-A- 2 628 781
- US-A- 4 299 354

## Beschreibung

Die Erfindung betrifft eine sanitäre Mischbatterie, insbesondere zum Wandeinbau, mit einer ein thermostatisches Element aufweisenden Thermostateinrichtung, wobei auf das thermostatische Element eine Überhubfeder und ,eine Rückstellfeder wirken.

Eine sanitäre Mischbatterie der eingangs beschriebenen Art ist bereits aus der deutschen Offenlegungsschrift 195 02 147 bekannt. Bei der bekannten Mischbatterie wirkt auf das eine Ende des thermostatischen Elements die Rückstellfeder, während auf das andere Ende des thermostatischen Elements die Überhubfeder wirkt. Bei der bekannten Mischbatterie wirken die Rückstellfeder und die Überhubfeder also in entgegengesetzter Richtung, wobei die Überhubfeder regelmäßig eine doppelt so große Federkraft hat wie die Rückstellfeder. Im übrigen wird bei der bekannten Mischbatterie die Rückstellfeder in Verbindung mit einer mehrteiligen Rückstelleinrichtung verwendet, während die Überhubfeder Teil einer mehrstückigen Überhubeinheit ist. Letztlich ergibt sich aufgrund der auf gegenüberliegenden Seiten vorgesehenen Anordnung der Rückstellfeder einerseits und der Überhubfeder andererseits und insbesondere in Verbindung mit der Rückstelleinrichtung und der Überhubeinheit ein erheblicher Platzbedarf, was sich entsprechend nachteilig auf die Bautiefe der Mischbatterie auswirkt. Darüber hinaus sind die Rückstelleinrichtung und die Überhubeinheit vergleichsweise aufwendige Baugruppen, was sich kostenmäßig nachteilig auswirkt.

Weiterhin ist aus US 4 299 354 A eine sanitäre Mischbatterie mit einem thermostatischen Element bekannt, wobei eine Überhubfeder und eine Rückstellfeder in gleicher Richtung so auf das thermostatische Element wirken, dass die beiden Federkräfte sich im Überhubfall addieren. Beide auf das thermostatische Element wirkenden Federn stützen sich dabei an einem ortsfesten Gehäuseteil ab. Diese Mischbatterie weist einen als massiver Ventilkörper ausgebildeter Temperatursteuerteil auf, der fest mit dem Thermostatelement verbunden ist.

Aus US 2 628 781 A ist eine Mischbatterie, bei der ein thermostatisches Element die Auslenkung eines als Hülse ausgebildeten Temperatursteuerteils variiert. Dabei kommen zwei verschiedene Federn zur Anwendung, nämlich eine Rückstellfeder und eine Überhubfeder, die hauptsächlich innerhalb des Temperatursteuerteils angeordnet sind. In dieser Mischbatterie sind die beiden Federn jedoch an den beiden Seiten einer Trennwand angeordnet und wird im Überhubfall die Rückstellfeder nicht weiter komprimiert.

Aufgabe der vorliegenden Erfindung ist es, eine Mischbatterie der eingangs beschriebenen Art zur Verfügung zu stellen, die einfach und kostengünstig aufgebaut ist und eine geringe Bautiefe hat.

Die zuvor hergeleitete und aufgezeigte Aufgabe ist erfindungsgemäß im wesentlichen dadurch gelöst, daß die Überhubfeder und die Rückstellfeder in gleicher Richtung auf das thermostatische Element wirken, so daß sich die Federkräfte der Überhubfeder und der Rückstellfeder im Überhubfall addieren. Bei der erfindungsgemäßen Ausgestaltung wird erstmals eine neuartige Anordnung der beiden Federn verwendet.

Darüber hinaus ist es bei der erfindungsgemäßen Ausgestaltung so, daß im Überhubfall nicht nur die Überhupfeder sondern auch die Rückstellfeder wirkt und sich damit die Federkräfte addieren, was letztlich zur Folge hat, daß eine Überhubfeder mit einer geringeren Federkraft verwendet werden kann.

Damit beide Federn ohne weiteres am thermostatischen Element angreifen können, ist ein Aufnahmeteil vorgesehen, an dem auf der einen Seite das thermostatische Element und auf der anderen Seite die Überhubfeder und die Rückstellfeder gemeinsam anliegen. Auf diese Weise kann ein übliches thermostatisches Element verwendet werden.

Erfindungsgemäß ist es im Hinblick auf eine platzsparende Ausbildung im übrigen, daß ein als Hülse ausgebildetes Temperatursteuerteil vorgesehen ist und daß die Überhubfeder und die Rückstellfeder innerhalb des Temperatursteuerteils angeordnet sind. Damit wird letztlich der für das Temperatursteuerteil ohnehin erforderliche Raum nunmehr für die beiden Federn genutzt, ohne daß ein besonderer zusätzlicher Platzbedarf für die Federn erforderlich wäre. In diesem Zusammenhang bietet es sich an, daß sich die Überhubfeder an einem innerhalb des Temperatursteuerteils vorgesehenen, vorzugsweise umlaufenden Bund abstützt, während sich die Rückstellfeder an einem gegenüber dem Temperatursteuerteil in axialer Richtung ortsfesten Gehäuseteil abstützt.

Bei einer Ausführungsform, die einen besonders geringen Platzbedarf hat, sind die Überhubfeder und die Rückstellfeder jeweils als Schraubenfedern ausgebildet, wobei eine Feder innerhalb der anderen Feder angeordnet ist. Durch die Anordnung der einen Feder innerhalb der anderen Feder wird nicht mehr Platz benötigt, als für die größere Feder ohnehin erforderlich ist.

Von Vorteil ist es im übrigen, wenn das Aufnahmeteil innerhalb des Temperatursteuerteils angeordnet ist, wobei die gesamte Ausbildung derart ist, daß das zugeführte Heißwasser durch das Temperatursteuerteil hindurchgeführt wird. Hierdurch ist sichergestellt, daß das Aufnahmeteil in Zuströmrichtung von unvermischtem Heißwasser angeströmt wird. In diesem Zusammenhang bietet es sich besonders an, das thermostatische Element mit seinem thermostatischen Bereich am Aufnahmeteil derart anliegen zu lassen, daß ein kleinerer Teil des thermostatischen Bereichs vom unvermischten Heißwasser, der größere Teil des thermostatischen Bereichs vom Mischwasser angeströmt wird. Die teilweise Anströmung des thermostatischen Bereichs des thermostatischen Elements mit unvermischtem Heißwasser führt zu einer Verstellung des als Hülse ausgebildeten Temperatursteuerteils in Richtung "kalt", je heißer das zulaufende Heißwasser ist. Hierdurch gelingt es, den systematischen Fehler von Thermostaten üblicher Bauweise, der sich bei schwankender Zulauftemperatur des Heißwassers ergibt, zu kompensieren.

Schließlich ist es bevorzugt, die erfindungsgemäße Anordnung der Überhubfeder und der Rückstellfeder in einer Kartusche zu realisieren, die eine für sich handhabbare und abgeschlossene Baueinheit darstellt. Dabei versteht es sich, daß sich die vorliegende Erfindung dann auch auf eine derartige Kartusche bezieht.

Ein Ausführungsbeispiel der vorliegenden Erfindung wird anhand der Zeichnung näher erläutert. Dabei zeigt
- Fig. 1: eine perspektivische Ansicht eines Teils einer erfindungsgemäßen Mischbatterie,
- Fig. 2: eine Explosionsdarstellung des Teils der sanitären Mischbatterie aus Fig. 1,
- Fig. 3: eine Explosionsdarstellung von Teilen der erfindungsgemäßen Mischbatterie,
- Fig. 4: eine vergrößerte perspektivische Darstellung einer erfindungsgemäßen Kartusche,
- Fig. 5: eine Querschnittsansicht einer erfindungsgemäßen Kartusche,
- Fig. 6: eine um 90° gegenüber der Darstellung aus Fig. 5 gedrehte Querschnittsansicht der erfindungsgemäßen Kartusche und
- Fig. 7: eine Explosionsdarstellung der Einzelteile der erfindungsgemäßen Kartusche.

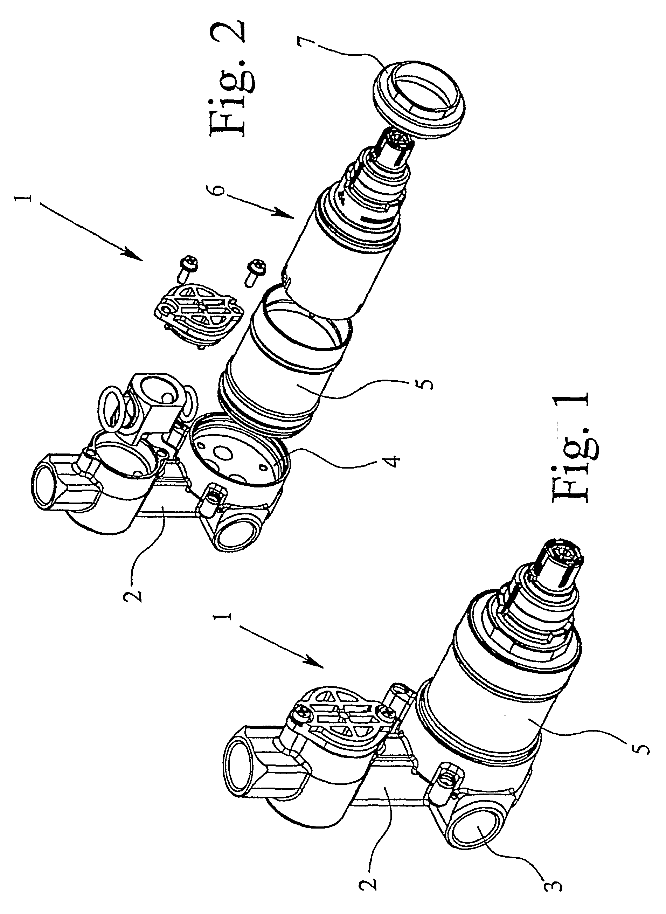

In den Fig. 1 und 2 sind Teile einer nicht vollständig dargestellte sanitären Mischbatterie 1 gezeigt, die insbesondere zum Wandeinbau vorgesehen ist. Die Mischbatterie 1 weist einen Grundkörper 2 auf, der einen Kaltwasseranschluß 3 und auf der gegenüberliegenden Seite einen nicht dargestellten Warmwasseranschluß aufweist. In eine Aufnahme 4 des Grundkörpers 2 ist eine Aufnahmehülse 5 für eine Kartusche 6 eingerastet. Über die Kartusche 6 ist eine Einstellung der Menge und der Temperatur des Mischwassers möglich. Hierzu weist die Mischbatterie 1 in der Kartusche eine Mengeneinstelleinrichtung und eine Temperatureinstelleinrichtung auf. Des weiteren ist eine Thermostateinrichtung in der Kartusche 6 vorgesehen. Die Fixierung der Kartusche 6 in bzw. an der Aufnahmehülse 6 erfolgt über eine Feststellmutter 7.

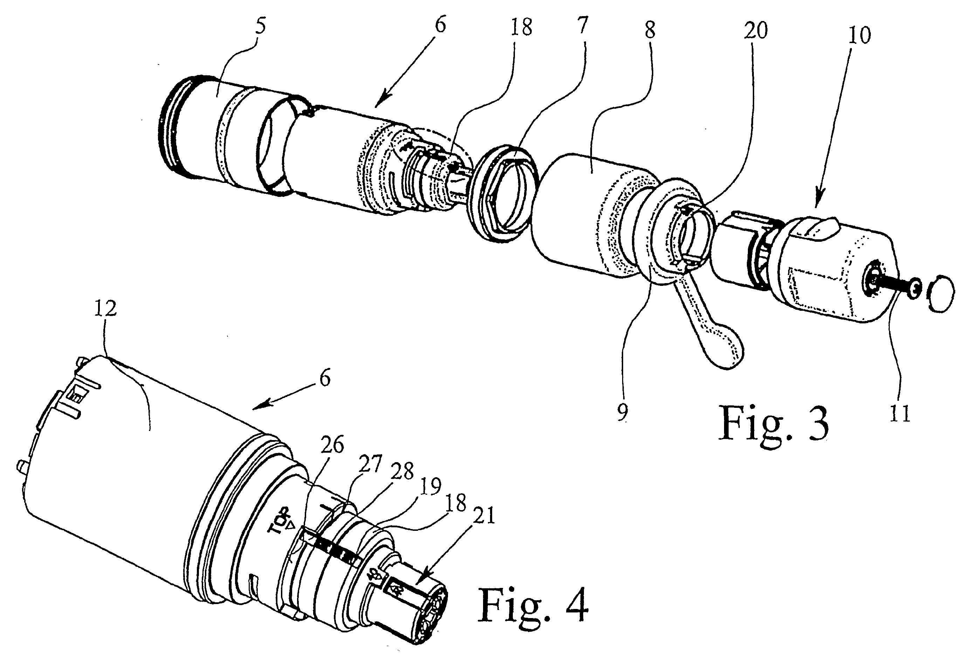

In Fig. 3 ist ergänzend zu den in Fig. 2 gezeigten Bauteilen dargestellt eine Abdeckhülse 8, die über die Aufnahmehülse 5 geschoben wird, ein erster Bedienungsdrehgriff 9 und ein sich aus mehreren Bauteilen zusammensetzender zweiter Bedienungsdrehgriff 10, der über eine Schraube 11 mit der Stirnseite der Kartusche 6 zu verschrauben ist.

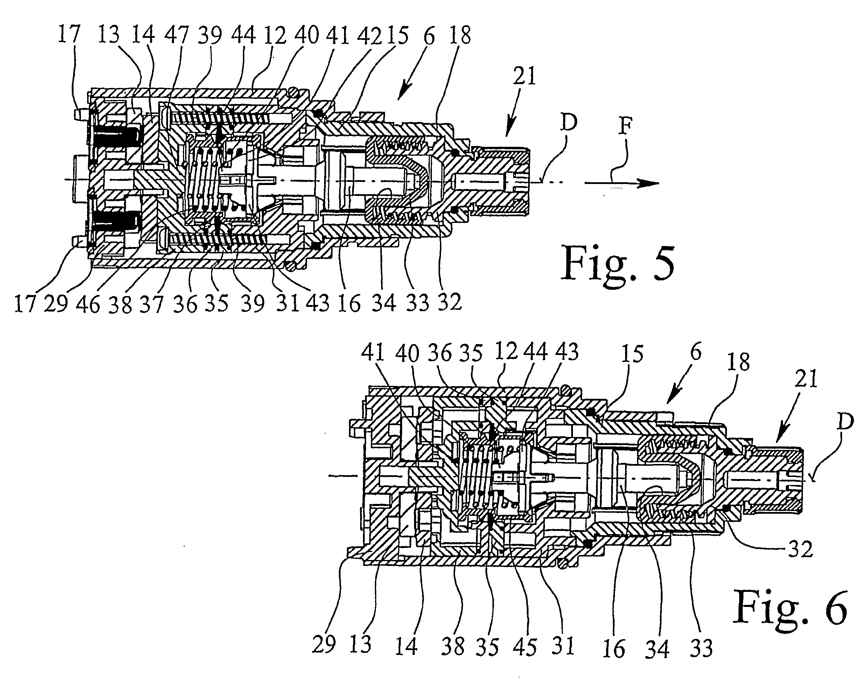

Wie sich insbesondere aus den Fig. 5 und 6 ergibt, ist die Mechanik zur Mengen- und Temperatursteuerung und -regelung in bzw. an der Kartusche 6 realisiert. Die Kartusche 6 selbst weist hierzu ein Außengehäuse 12 auf, in dem u. a. eine feststehende Ventilscheibe 13 und eine damit zusammenwirkende drehbewegliche Ventilscheibe 14 der Mengeneinstelleinrichtung vorgesehen sind.

Wesentlich ist nun, daß im Außengehäuse 12 ein Innengehäuse 15 koaxial zum Außengehäuse 12 um wenigstens 180° um die Achse D, bei der es sich um die Mittellängsachse der Kartusche 6 handelt, drehbar ist. Dabei ist die ein thermostatisches Element 16 aufweisende Thermostateinrichtung im Innengehäuse 15 angeordnet und wird damit bei Drehung des Innengehäuses 15 gegenüber dem Außengehäuse 12 mit gedreht. Weiterhin ist die drehbewegliche Ventilscheibe 14 am Innengehäuse 15 drehfest gehalten, so daß auch die Ventilscheibe 14 bei Drehung des Innengehäuses 15 gegenüber dem Außengehäuse 12 mit gedreht wird. Demgegenüber ist die feststehende Ventilscheibe 13 drehfest gegenüber dem Außengehäuse, so daß bei Drehung des Innengehäuses 15 eine Relativbewegung der beweglichen Ventilscheibe 14 gegenüber der festen Ventilscheibe 13, die sich nicht bewegt, stattfindet.

Im Ergebnis bedeutet die vorgenannte Ausgestaltung, daß die in die Aufnahmehülse 5 und die Aufnahme 4 des Grundkörpers 2 eingesetzte Kartusche 6 zur Anpassung an die jeweiligen baulichen Gegebenheiten nicht aus der zuvor beschriebenen Einbaulage entnommen, sondern daß lediglich das Innengehäuse 15 jeweils um 180° um die Achse D gedreht werden muß, um ein fehlerfreies Funktionieren der Mischbatterie 1 in Abhängigkeit der Lage der Anschlüsse zu gewährleisten. Um im übrigen in diesem Zusammenhang zu verhindern, daß sich bei Drehung des Innengehäuses 15 das Außengehäuse 12 mit dreht, sind am unteren Ende der Kartusche 6 entsprechende Fixiervorsprünge 17 zum Zusammenwirken mit im einzelnen nicht dargestellten Öffnungen am Grundkörper 2 bzw. an der Aufnahme 4 vorgesehen.

Stirnseitig, d. h. auf der dem Benutzer zugewandten Seite ist das Innengehäuse 15 aus dem Außengehäuse 12 mit einem Angriffsabschnitt 18 herausgeführt. Auf den Angriffsabschnitt 18 ist der erste Bedienungsdrehgriff 9 zur Mengeneinstellung aufschiebbar. Zum Aufschieben des ersten Bedienungsdrehgriffs 9 auf den Angriffsabschnitt 18 sowie zur drehfesten Halterung des Bedienungsdrehgriffs 9 dient eine in Längsrichtung der Kartusche 6 verlaufende Nut 19, die mit einem entsprechenden Vorsprung 20 am ersten Bedienungsdrehgriff 9 zusammenwirkt. Bei der dargestellten Ausführungsform sind entsprechende Nuten 19 und Vorsprünge 20 jeweils auf gegenüberliegenden Seiten des Angriffsabschnitts 18 und in der entsprechenden Einsetzöffnung des ersten Bedienungsdrehgriffs 9 vorgesehen.

Um von der Stirnseite der Kartusche 6 nicht nur die Mengen- sondern auch die Temperatureinstellung vornehmen zu können, weist die Temperatureinstelleinrichtung einen aus dem Innengehäuse 15 stirnseitig herausragenden Angriffsabschnitt 21 zum Aufsetzen des zweiten Bedienungsdrehgriffs 10 auf. Im montierten Zustand mit befestigten Bedienungsdrehgriffen 9, 10 weisen der erste Bedienungsdrehgriff 9 und der zweite Bedienungsdrehgriff 10 die gleiche Drehachse auf, bei der es sich um die Achse D handelt.

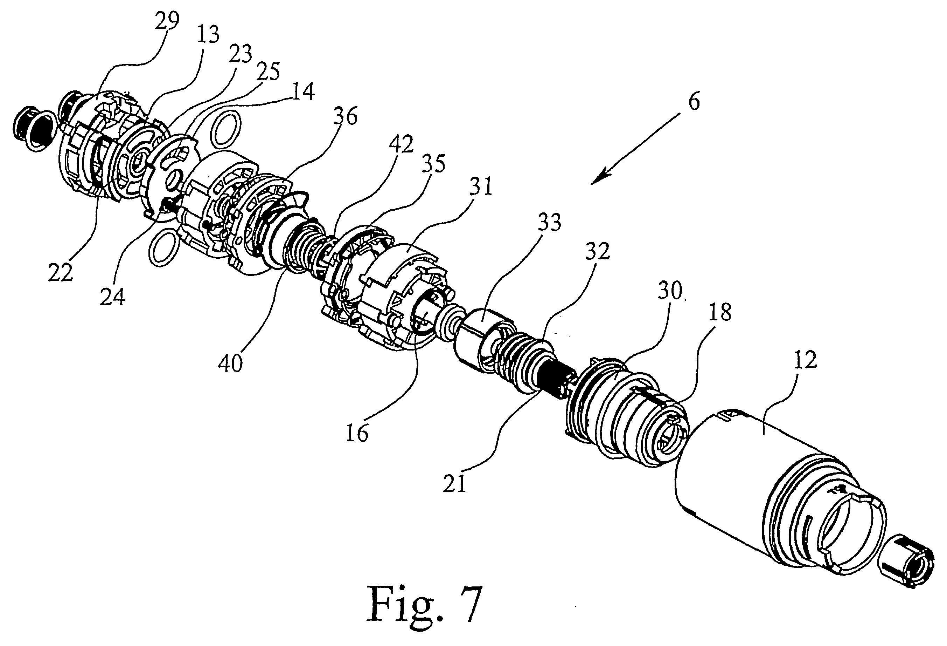

Wie sich aus Fig. 7 ergibt, erstrecken sich die in den beiden Ventilscheiben 13, 14 vorgesehenen Ventilöffnungen 22, 23, 24, 25 über weniger als 90°, wobei sich der maximale Öffnungsquerschnitt nach einer Drehbewegung von etwa 90° ergibt.

Grundsätzlich kann vorgesehen sein, daß das Innengehäuse 15 gegenüber dem Außengehäuse 12 durch entsprechende Anschläge nur um 180° drehbar ist. Vorliegend sind derartige Anschläge jedoch nicht vorgesehen. Zur Mengeneinstellung sind Mittel zur Drehbegrenzung des ersten Bedienungsdrehgriffs 9 vorgesehen, die eine Drehung von nur etwa 90° ermöglichen. Im einzelnen weisen die Mittel zur Drehbegrenzung des ersten Bedienungsdrehgriffs 9 eine am Umfang des Außengehäuses 12 verlaufende Führungsnut 26 auf, in die der Vorsprung 20 eingreift. Die Führungsnut 26 erstreckt sich dabei über eine Bogenlänge von etwa 90°, so daß die maximale Drehung des ersten Bedienungsdrehgriffes 9 hierdurch vorgegeben ist. Im übrigen sind am Außengehäuse 12 und am überstehenden Angriffsabschnitt 18 des Innengehäuses 15 korrespondierende Markierungen 27, 28 zur Anzeige des Drehzustands des Innengehäuses 15 gegenüber dem Außengehäuse 12 vorgesehen.

Wie sich insbesondere aus den Fig. 5 und 6 ergibt, stellt die Kartusche 6 mit den darin enthaltenden Bauteilen eine für sich handhabbare und abgeschlossene Baueinheit dar. Die Kartusche 6 besteht aus einer Vielzahl von Bauteilen, die in Fig. 7 im einzelnen dargestellt sind, wenngleich nicht alle Teile im einzelnen beschrieben sind. Zum Verschluß der Kartusche 6 dient vorliegend eine Bodenplatte 29, die mit dem Außengehäuse 12 verrastet ist. Dabei ist die feste Ventilscheibe 13 drehfest an der Bodenplatte 29 gehalten, so daß sich auf diese Weise ohne weiteres eine drehfeste Verbindung mit dem Außengehäuse 12 ergibt.

Wie sich weiter aus den Fig. 5 bis 7 ergibt, ist das Innengehäuse 15 mehrteilig ausgebildet; benachbarte Teile des Innengehäuses 15 sind drehfest miteinander verbunden. Das Innengehäuse 15 weist ein oberes Innengehäuseteil 30 mit dem Angriffsabschnitt 18 auf. Mit dem Innengehäuseteil 30 ist das Innengehäuseteil 31 verbunden, wobei zwischen den Innengehäuseteilen 30, 31 eine Verstellschraube 32 und eine Verstellmutter 33 zur Erzielung einer Axialbewegung des thermostatischen Elements 16 und der damit verbundenen Bestandteile vorgesehen sind. Außenseitig an der Verstellschraube 32 befindet sich der Angriffsabschnitt 21 für den zweiten Bedienungsdrehgriff 10 zur Temperaturverstellung. Des weiteren befindet sich zwischen den beiden Innengehäuseteilen 30, 31 das als Dehnstoffelement ausgebildete thermostatische Element 16, das mit seinem einen Ende in einer entsprechenden Aufnahme 34 der Verstellmutter 33 aufgenommen ist.

An das Innengehäuseteil 31 schließen sich zwei weitere vergleichsweise schmale Innengehäuseteile 35, 36 an, zwischen denen eine Dichtmembran 37 gehalten ist. Schließlich ist ein unteres Innengehäuseteil 38 vorgesehen, das sich an das Innengehäuseteil 36 anschließt. Zur Verspannung der Dichtmembran 37 sind die Innengehäuseteile 31, 35, 36 und 38 über entsprechende Schrauben 39 miteinander verschraubt.

Wie sich insbesondere aus den Fig. 5 und 6 ergibt, wirken auf das thermostatische Element 16 eine Überhubfeder 40 und eine Rückstellfeder 41, die sich ebenfalls innerhalb der Kartusche 6 befinden.

Wesentlich in diesem Zusammenhang ist, daß die Überhubfeder 40 und die Rückstellfeder 41 in gleicher Richtung auf das thermostatische Element 16 wirken, vorliegend nämlich in Pfeilrichtung F, so daß sich die Federkräfte der Überhubfeder 40 und der Rückstellfeder 41 im Überhubfall, also bei einer Längenänderung des thermostatischen Elements addieren.

Im dargestellten Ausführungsbeispiel sind die Überhubfeder 40 und die Rückstellfeder 41 auf der gleichen Seite des thermostatische Elements 16 angeordnet. Dabei wird eine besonders platzsparende Anordnung dadurch erzielt, daß die Überhubfeder 40 und die Rückstellfeder 41 jeweils als Schraubenfedern ausgebildet sind, wobei die Rückstellfeder 41 innerhalb der Überhubfeder 40 angeordnet ist.

Zur Übertragung der Federkräfte sowohl der Überhubfeder 40 als auch der Rückstellfeder 41 auf das thermostatische Element 16 und zur Anlage dieser Federn an ihrem einen Ende dient ein Aufnahmeteil 42, das, was im einzelnen nicht dargestellt ist, kreuzartig ausgebildet ist und Durchströmungsöffnungen aufweist. Das Aufnahmeteil 42 weist einen äußeren flanschartigen Angriffsabschnitt 43 und einen endseitigen Zapfen 44 auf. Am Angriffsabschnitt 43 liegt dabei die Überhubfeder 40 an, während die Rückstellfeder 41 auf den Zapfen 44 aufgesetzt ist. Auf der gegenüberliegenden Seite des Aufnahmeteils 42 liegt das thermostatische Element 16 an. Nicht dargestellt ist, daß vorliegend die Überhubfeder 40 und die Rückstellfeder 41 etwa die gleiche Federkraft, nämlich jeweils etwa 50 N aufweisen.

Als Temperatursteuerteil 45, auf das das thermostatische Element 16 wirkt, dient vorliegend eine im Innengehäuse 15 gelagerte Hülse. Dabei befindet sich das Aufnahmeteil 42 innerhalb des Temperatursteuerteils 45 und wird über die Überhubfeder 40 gegen einen inneren Anschlag des Temperatursteuerteils 45 gedrückt. Das Temperatursteuerteil 45 weist an seinen Stirnseiten jeweils Steuerkanten für Heiß- und Kaltwasser auf. Vorliegend, und zwar mit Bezug auf die Fig. 5 und 6, befindet sich die Heißwassersteuerkante auf der linken, die Kaltwassersteuerkante auf der rechten Seite des Temperatursteuerteils 45. Aufgrund der gewählten Anordnung strömt das Heißwasser an der Heißwassersteuerkante vorbei durch das Temperatursteuerteil 45. Das Heißwasser trifft dabei im unvermischten Zustand nicht nur auf das innerhalb des Temperatursteuerteils 45 angeordnete Aufnahmeteil 42, sondern auch auf den thermostatischen Bereich des thermostatischen Elements 16, der unmittelbar am Aufnahmeteil 42 anliegt. Hierdurch ist sichergestellt, daß die unvermischte Heißwasserströmung zumindest einen Teil, vorliegend einen kleineren Teil, des thermostatischen Bereichs des thermostatischen Elements 16 anströmt, während der andere, vorliegend größere Teil des thermostatischen Bereichs des thermostatischen Elements 16 vom Mischwasser umströmt wird.

Um den zur Verfügung stehenden Raum im Innengehäuse 15 optimal auszunutzen, sind die Überhubfeder 40 und die Rückstellfeder 41 innerhalb des Temperatursteuerteils 45 angeordnet. Dabei stützt sich die auch zur Rückstellung des Temperatursteuerteils 45 dienende Überhubfeder 40 auf der dem Aufnahmeteil 42 gegenüberliegenden Seite an einem umlaufenden Bund 46 des Temperatursteuerteils 45 ab, während sich die auch zur Halterung des thermostatischen Elements 16 dienende Rückstellfeder 41 am Innengehäuseteil 38 abstützt. Hierfür ist ein entsprechender Zapfen 47 vorgesehen, auf den die Rückstellfeder 41 aufgesetzt ist.

## Patentansprüche

1. Sanitäre Mischbatterie (1), insbesondere zum Wandeinbau, mit einer ein thermostatisches Element (16) aufweisenden Thermostateinrichtung, wobei auf das thermostatische Element (16) eine Überhubfeder (40) und eine Rückstellfeder (41) wirken, wobei die Überhubfeder (40) und die Rückstellfeder (41) in gleicher Richtung auf das thermostatische Element (16) wirken, so daß sich die Federkräfte der Überhubfeder (40) und der Rückstellfeder (41) im Überhubfall addieren, und wobei sich die Rückstellfeder (41) an einem Gehäuseteil abstützt,
**dadurch gekennzeichnet,**
**daß** ein als Hülse (45) ausgebildetes Temperatursteuerteil vorgesehen ist und die Überhubfeder (40) und die Rückstellfeder (41) innerhalb der Hülse (45) angeordnet sind, daß sich die Überhubfeder (40) an einem innerhalb der Hülse (45) vorgesehenen, vorzugsweise umlaufenden Bund (46) abstützt und das Gehäuseteil, an dem sich die Rückstellfeder (41) abstützt, gegenüber der Hülse (45) in axialer Richtung ortsfest ist und daß ein Aufnahmeteil (42) vorgesehen ist, an dem auf der einen Seite das thermostatische Element (16) und auf der anderen Seite die Überhubfeder (40) und die Rückstellfeder (41) gemeinsam anliegen, und daß das Aufnahmeteil (42) durch die Überhubfeder (40) gegen einen inneren Anschlag der Hülse (45) gedrückt wird.

2. Sanitäre Mischbatterie nach Anspruch 1, **dadurch gekennzeichnet, daß** die Überhubfeder (40) und die Rückstellfeder (41) auf der gleichen Seite in bezug auf das thermostatische Element (16) angeordnet sind.

3. Sanitäre Mischbatterie nach Anspruch 1 oder 2, **dadurch gekennzeichnet, daß** die Überhubfeder (40) und die Rückstellfeder (41) jeweils als Schraubenfedern ausgebildet sind und eine Feder innerhalb der anderen Feder angeordnet ist.

4. Sanitäre Mischbatterie nach einem der Ansprüche 1 bis 3, **dadurch gekennzeichnet, daß** die Überhubfeder (40) und die Rückstellfeder (41) jeweils zumindest im wesentlichen die gleiche Federkraft aufweisen.

5. Sanitäre Mischbatterie nach einem der Ansprüche 1 bis 4, **dadurch gekennzeichnet, daß** die Überhubfeder (40) und die Rückstellfeder (41) in einer Kartusche (6) angeordnet sind.

6. Sanitäre Mischbatterie nach Anspruch 5, **dadurch gekennzeichnet, daß** die Kartusche (6) verschlossen ist und eine für sich handhabbare Baueinheit darstellt.

7. Sanitäre Mischbatterie (1), nach einem der Ansprüche 1 bis 6,
**dadurch gekennzeichnet,**
**daß** das thermostatische Element (16) mit seinem thermostatischem Bereich am Aufnahmeteil (42) derart anliegt, daß ein insbesondere kleinerer Teil des thermostatischen Bereichs des thermostatischen Elements (16) vom unvermischten Heißwasser, der andere, insbesondere größere Teil des thermostatischen Bereichs des thermostatischen Elements (16) vom Mischwasser angeströmt bzw. umströmt wird.

8. Sanitäre Mischbatterie nach Anspruche 7, **dadurch gekennzeichnet, daß** das Aufnahmeteil (42) innerhalb des Temperatursteuerteils (45) angeordnet ist und das zugeführte Heißwasser durch das Temperatursteuerteil (45) hindurchgeführt wird.

## Claims

1. Sanitary mixer tap (1), in particular for wall mounting, with a thermostat device having a thermostatic element (16), an overstroke spring (40) and a return spring (41) acting on the thermostatic element (16), the overstroke spring (40) and the return spring (41) acting on the thermostatic element (16) in the same direction, so that, in the event of an overstroke, the spring forces of the overstroke spring (40) and the return spring (41) are added together, and the return spring (41) being supported on a housing part, **characterized in that** a temperature control part designed as a sleeve (45) is provided, and the overstroke spring (40) and return spring (41) are arranged within the sleeve (45), **in that** the overstroke spring (40) is supported on a preferably peripheral collar (46) provided within the sleeve (45), and the housing part on which the return spring (41) is supported is fixed in the axial direction with respect to the sleeve (45), and **in that** a reception part (42) is provided, against which, on one side, the thermostatic element (16) and, on the other side, the overstroke spring (40) and the return spring (41) jointly come to bear, and **in that** the reception part (42) is pressed against an inner stop of the sleeve (45) by the overstroke spring (40).

2. Sanitary mixer tap according to Claim 1, **characterized in that** the overstroke spring (40) and the return spring (41) are arranged on the same side with respect to the thermostatic element (16).

3. Sanitary mixer tap according to Claim 1 or 2, **characterized in that** the overstroke spring (40) and the return spring (41) are designed in each case as helical springs, and one spring is arranged within the other spring.

4. Sanitary mixer tap according to one of Claims 1 to 3, **characterized in that** the overstroke spring (40) and the return spring (41) have in each case at least essentially the same spring force.

5. Sanitary mixer tap according to one of Claims 1 to 4, **characterized in that** the overstroke spring (40) and the return spring (41) are arranged in a cartridge (6).

6. Sanitary mixer tap according to Claim 5, **characterized in that** the cartridge (6) is closed and constitutes a separately handlable structural unit.

7. Sanitary mixer tap (1) according to one of Claims 1 to 6, **characterized in that** the thermostatic element (16) bears with its thermostatic region against the reception part (42) in such a way that the unmixed hot water flows onto or around an, in particular, smaller part of the thermostatic region of the thermostatic element (16) and the mixed water flows onto or around the other, in particular, larger part of the thermostatic region of the thermostatic element (16).

8. Sanitary mixer tap according to Claim 7, **characterized in that** the reception part (42) is arranged within the temperature control part (45), and the hot water supplied is led through the temperature control part (45).

## Revendications

1. Mitigeur (1) pour installation sanitaire, notamment pour l'installation dans une paroi, comprenant un dispositif de thermostat présentant un élément thermostatique (16), un ressort de surcourse (40) et un ressort de rappel (41) agissant sur l'élément thermostatique (16), le ressort de surcourse (40) et le ressort de rappel (41) agissant dans la même direction sur l'élément thermostatique (16) de sorte que les forces de ressort du ressort de surcourse (40) et du ressort de rappel (41) s'additionnent dans le cas d'une surcourse et le ressort de rappel (41) s'appuyant sur une partie du boîtier,
**caractérisé en ce que**
l'on prévoit une partie de commande de température réalisée sous la forme d'une douille (45) et le ressort de surcourse (40) et le ressort de rappel (41) sont disposés à l'intérieur de la douille (45), **en ce que** le ressort de surcourse (40) s'appuie sur un épaulement de préférence périphérique (46) prévu à l'intérieur de la douille (45) et la partie du boîtier sur laquelle s'appuie le ressort de rappel (41) est fixée en direction axiale par rapport à la douille. (45) et **en ce qu'**il est prévu une partie de réception (42) contre laquelle s'appliquent d'un côté l'élément thermostatique (16) et de l'autre côté le ressort de surcourse (40) et le ressort de rappel (41) conjointement, et **en ce que** la partie de réception (42) est pressée par le ressort de surcourse (40) contre une butée interne de la douille (45).

2. Mitigeur pour installation sanitaire selon la revendication 1, **caractérisé en ce que** le ressort de surcourse (40) et le ressort de rappel (41) sont disposés du même côté par rapport à l'élément thermostatique (16).

3. Mitigeur pour installation sanitaire selon la revendication 1 ou 2, **caractérisé en ce que** le ressort de surcourse (40) et le ressort de rappel (41) sont réalisés chacun sous la forme d'un ressort hélicoïdal et un ressort est disposé à l'intérieur de l'autre ressort.

4. Mitigeur pour installation sanitaire selon l'une quelconque des revendications 1 à 3, **caractérisé en ce que** le ressort de surcourse (40) et le ressort de rappel (41) présentent chacun au moins essentiellement la même force de ressort.

5. Mitigeur pour installation sanitaire selon l'une quelconque des revendications 1 à 4, **caractérisé en ce que** le ressort de surcourse (40) et le ressort de rappel (41) sont disposés dans une cartouche (6).

6. Mitigeur pour installation sanitaire selon la revendication 5, **caractérisé en ce que** la cartouche (6) est fermée et constitue une unité constructive manipulable en soi.

7. Mitigeur (1) pour installation sanitaire selon l'une quelconque des revendications 1 à 6, **caractérisé en ce que** l'élément thermostatique (16) s'applique avec sa région thermostatique sur la partie de réception (42) de telle sorte qu'une partie notamment plus petite de la région thermostatique de l'élément thermostatique (16) soit enveloppée ou parcourue par le courant d'eau chaude non mélangé et que l'autre partie notamment plus grande de la région thermostatique de l'élément thermostatique (16) soit enveloppée ou parcourue par de l'eau mélangée.

8. Mitigeur pour installation sanitaire selon la revendication 7, **caractérisé en ce que** la partie de réception (42) est disposée à l'intérieur de la partie de commande de température (45) et l'eau chaude alimentée passe par la partie de commande de température (45).
